Europäisches Patentamt

**European Patent Office**

Office européen des brevets

(11) Publication number: **0 179 930**
**A1**

# (12) EUROPEAN PATENT APPLICATION

(21) Application number: **84112686.5**

(22) Date of filing: **20.10.84**

(51) Int. Cl.⁴: **A 01 D 45/02**

(43) Date of publication of application: **07.05.86**
**Bulletin 86/19**

(84) Designated Contracting States: **AT BE CH DE FR GB IT LI LU NL SE**

(71) Applicant: **SENTRALE ONTWIKKELINGS- EN VOORLIGTINGSKOÖPERASIE BEPERKT, Seventh Avenue Industrial Area, Bothaville Orange Free State (ZA)**

(72) Inventor: **Visagie, Andrie Diederich, 1, Geelhout Street Meyerhof, Bothaville Orange Free State (ZA)**

(74) Representative: **Stuhlmann, Wilhelm et al, Patent- und Rechtsanwälte Dr. Ing. Stuhlmann Dipl.-Ing. Willert Dr.-Ing Oidtmann Dipl.-Ing. Bockermann Dipl.-Ing. Schneiders Bergstrasse 159, D-4630 Bochum 1 (DE)**

(54) Combine harvester and reaper.

(57) A reaper (12) has toes (22) to gather plants, like maize having ears, into an upwardly and rearwardly extending chute (14) having a longitudinal slot (16) to pass the stalks of the plants. The ears are transported along the chute by means of an auger (24). Underneath an upper rear end (37) of the slot, there is provided a rotary cutter (27) arranged to sever the ears from the stalks and to shop the stalks into pieces. The auger transports the ears further along the chute to a transverse barrel from where they are transported to a thresher.

ACTORUM AG

THIS INVENTION relates to reaping. It relates more specifically to a reaper for reaping maize or other crops having large ears. It relates also to a combine harvester having such a reaper.

In a combine harvester ears are reaped and threshed. Reaping can include gathering in most of a plant, or it can include gathering mostly ears only and leaving most of the rest of the plant on the land. The latter method of reaping is preferred to the former because, inter-alia, the combine harvester then works less material for any specific yield. However, reapers known to the inventor which are capable of performing such reaping, are generally complicated in that they have many moving parts. Thus, they are also prone to high rates of wear. They are correspondingly expensive, both to acquire and to use.

In accordance with the invention, there is provided a reaper suitable for use in reaping crops such as maize having ears, the reaper being adapted to reap ears from plants and to leave stalks and leaves of the plants on the land, the reaper including

3

a chute arranged to slope in use from a low level upwardly and rearwardly, and having a slot from its fore lower end where it is open-ended, toward its aft upper end, the slot being of a width slidingly to pass the stalks and to retain the ears of crops for which it is intended;

gathering members disposed on either side of the slot at the fore lower end of the chute and adapted, in use, to guide plants into the slot and into the chute;

rotary transport means extending along the chute and rotatable to transport ears upwardly and rearwardly along the chute; and

severing means near the art upper end of the slot and adapted to sever ears from their stalks.

The rotary transport means may include an auger within the chute. Then the chute may be of hollow section complementary to the shape of the auger, a part-annular passage being defined between the chute and the periphery of an auger helix. The part-annular passage will be of a width adapted, generally, to pass stalks and leaves of the plant and not to pass ears. This will allow the auger to get a purchase on the ears to displace them upwardly and rearwardly along the chute.

4

The auger may be tapered at its fore lower end, the annular passage being correspondingly diverging, to facilitate introduction of the ears into the auger.

Further to facilitate introduction of ears into the auger, the chute and the auger may be arranged to be, in use, laterally inclined relative to the intended direction of motion, when seen in plan view. The gathering members may then be arranged to introduce ears into the auger immediately behind and to the side of its lower fore end.

In a simple embodiment, the severing means may include a stationary cutting blade extending across the slot. In a more advanced embodiment, the severing means may include dynamic cutting means, eg in the form of a chopper or carver, adapted to effect cutting and to chop or carve the stalks and leaves into pieces. The chopper or carver may have a rotary blade rotatable about a decumbent axis. If desired, it may instead be rotatable about an upwardly extending axis.

By way of development, the transport means may include a pair of augers, which may be counter-rotating, extending alongside each other within and along the chute, the gathering members being arranged in use to introduce ears in between adjacent lower fore ends of the augers. The gathering members and the slot may be arranged to feed ears mainly into one of the augers.

The invention extends to a combine harvester having a thresher and a reaper as herein described.

The chute of the combine harvester may be arranged to slope at an angle of between about 20 degrees and about 60 degrees, conveniently about 40 degrees, with the land surface, in use.

The severing means may be arranged to sever the stalks at a height calculated to be closely underneath the ears, so as to optimize the quantity of plant material which will be left behind and which will then not be taken into the thresher. When the severing means is in the form of dynamic cutting means, it may drivingly be connected to a source of rotary power of the combine harvester. Driving connection may be effected by means of a V-belt and pulley arrangement.

The rotary transport means may drivingly be connectable or connected to a source of rotary power associated with moving the combine harvester over a land. Conveniently, the arrangement may be such that the rotation speed of the transport means and the translation speed of the combine harvester will, in use, be in direct proportion. The relation between the rotation speed of the transport means and the translation speed of the combine harvester may be such that the projected feeding speed of the auger will be about the same as, or slightly more than, the translation speed of the combine harvester.

The invention is now described by way of example with reference to the accompanying diagrammatic drawings. In the drawings

Figure 1 shows in three-dimensional view a combine harvester in accordance with the invention;

Figure 2 shows, to a larger scale, a sectional side view of a reaper of the combine harvester of Figure 1;

Figure 3 shows a sectional plan view corresponding to that of Figure 2;

Figures 4 and 5 show, respectively in plan view, two further embodiments of reapers in accordance with the invention;

Figure 6 shows schematically in rear view, a first embodiment of drive means for the augers of Figure 5; and

Figure 7 shows, schematically in plan view, a second embodiment of drive means for the augers of Figure 5.

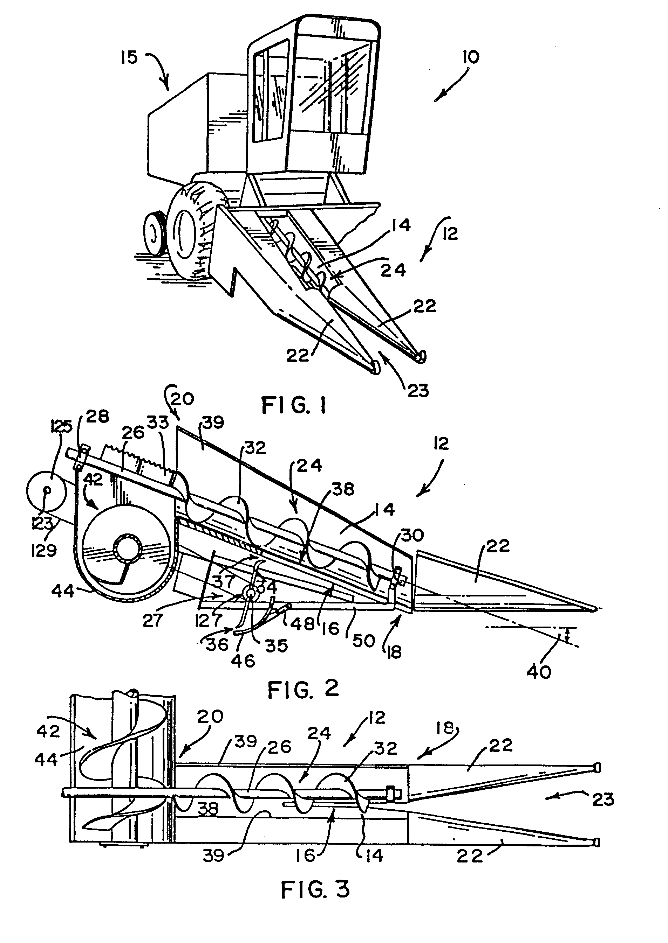

With reference to Figure 1 of the drawings, a combine harvester in accordance with the invention is generally indicated by reference numeral 10. The combine harvester 10 is self-propelled and has a composite reaper for a plurality of rows of ears. Only one reaper, indicated at 12 for one row of ears is shown. The combine harvester also includes a thresher generally indicated at 15.

The reaper 12 is shown in more detail in Figures 2 and 3 of the drawings.

The reaper 12 includes a chute 14 which is arranged to slope from a low level upwardly and rearwardly. The chute 14 has a slot 16 extending from its fore lower end 18 (where it is open-ended) upwardly and rearwardly to near its aft upper end 20. The width of the slot 16, which can be seen in Figure 3, is adapted to pass stalks and leaves of plants for which the combine harvester 10 is intended and to retain ears of such plants.

Associated with the fore lower end of the chute 14, there is provided a pair of forwardly tapering toes 22 which provide gathering members for the reaper 12. The toes 22 are laterally spaced and define between them a converging passage 23 converging from the front ends of the toes 22 toward the chute 14 where the converging

8

passage 23 is in register with the fore end of the slot 16.

The reaper 12 further includes rotary transport means in the form of an auger 24 which is disposed longitudinally along and within the chute 14. For this purpose, the chute 14 has a floor portion 38 of a shape complemental to the auger. It may thus be roughly semi-circular in shape and having tangentially upwardly extending side walls 39. The auger 24 is accommodated within the chute 14 such that there is a semi-annular space between a helix 32 of the auger 24 and the floor portion 38 of the chute 14. The auger 24 also comprises a shaft 26 which is supported for rotation in aft and fore bearings 28 and 30 respectively. The shaft 26 is driven in association with the drive wheels of the combine harvester as herein described, or directly from the combine harvester drive gear.

The reaper 12 further has severing means in the form of a rotary cutter 27. The rotary cutter 27 includes a diametrical blade 34 rotatable about a spindle 35. The blade 34 has peripheral cutting edges 36 the rotational path of which goes directly underneath the slot 16 in the vicinity of the upper extremity 37 of the slot 16.

9

In use, the combine harvester 10 is driven over an agricultural land along rows of crops such that converging passages 23 defined between the adjacent pairs of toes 22 are in register with the rows of crops. Each pair of toes 22 guide plants in the row into the slot 16. It is to be appreciated that the toes 22 and thus the fore lower end 18 of the chute 14 move close to ground level and in some cases even slide along humps and ridges in the soil to pick up fallen plants. Thus, the fore lower end of the slot 16 embraces plants at a low level. As the reaper 12 moves forward, the stalks and leaves of the plant slide through the slot 16, but the ears are retained in the chute. The helix 32 of the auger 24 displaces the ears upwardly along the chute 14 up to the upper aft end 37 of the slot 16 where the rotary cutter 27 cuts off the stalks and leaves in the vicinity of, but underneath the ears. Thus, substantially only the ears and those part of the plant upward of the ears are retained in the chute 14. The ears and those parts of the plant in the chute 14, are transported further by means of the auger 24 to fall into a transverse open-sided barrel 44 common to all of the reapers of the combine harvester 10. Introduction of the ears and parts of the plant into the barrel 44 is facilitated by a longitudinal blade 33 on the shaft 26 of the auger 24 immediately behind the helix 32. The blade 33 is conveniently in register with the rear end of the helix 32. A lateral auger conveyor 42 conveys the ears and the plant material to the thresher 15. Advantageously, the outer edge of the blade 33 is toothed. This provides a better grip on the ears and other residual plant material to feed them into the barrel 44 to prevent blockage.

A part-circular shield 46 is fixed to a beam 50 of the body of the reaper 12 to shield the rotary cutter 27 from any ears not gathered by the toes 22. The shield 46 is stabilized by means of one or more straps 48 extending between the shield 46 and the beam 50. Should the shield 46 not be provided, it is possible that the rotary cutter 36 may chop such ears not gathered by the toes 22, thus scattering the kernels. It would thus not be possible to gather such ears, after reaping, by hand, and will result in a waste. The shield 46 is advantageously removable so that it need not always be used.

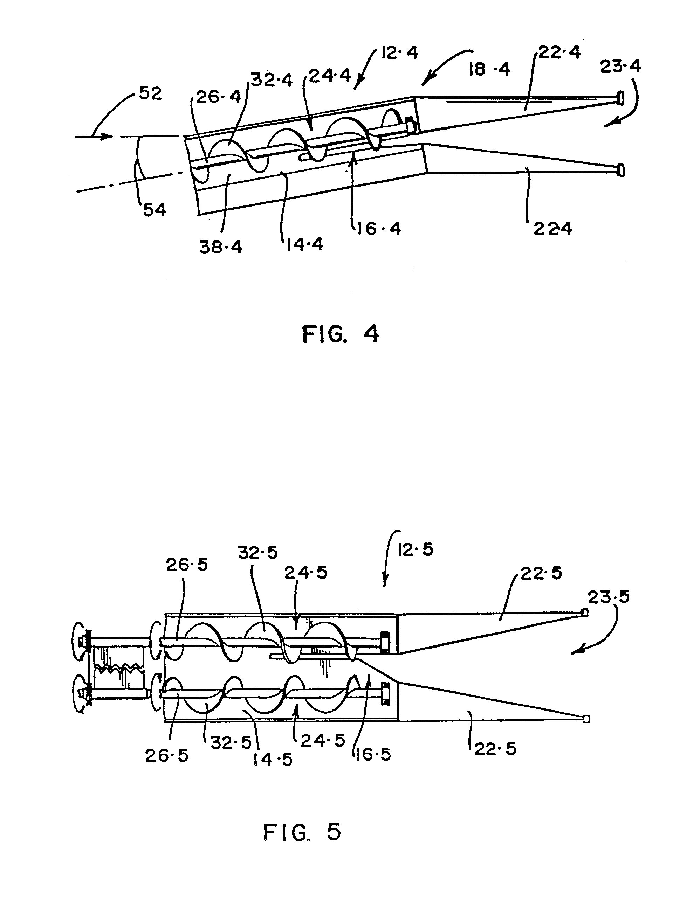

With reference to Figure 4, another embodiment of a reaper in accordance with the invention is shown fragmentarily, as indicated by reference numeral 12.4. The reaper 12.4 is similar to the reaper of Figures 1, 2 and 3, and like reference numerals refer to like parts. The reaper 12.4 is not described in detail.

11

The main difference between the reaper 12.4 and the reaper 12 is that the chute 14.4 and the auger 24.4 are laterally inclined, when seen in plan view, in relation to the intended direction of motion indicated by arrow 52. The angle of inclination is indicated at 54.

The passage 23.4 in register with the fore end of the slot 16.4, is arranged to introduce ears into the auger 24.4 at a point to the side of and immediately behind the fore end of the auger 24.4. The inventor believes that this arrangement will facilitate introduction of the ears into the auger.

With reference to Figure 5, yet another embodiment of a reaper in accordance with the invention, and which is shown fragmentarily, is generally indicated by reference numeral 12.5. The reaper 12.5 is generally similar to the reaper of Figures 1, 2 and 3, and like reference numerals refer to like parts. The reaper 12.5 is not again described in detail.

The main feature of the reaper 12.5 is that it has a pair of counter-rotating augers 24.5. The augers 24.5 extend alongside each other, along and within the chute 14.5. The slot 16.5 is arranged to extend underneath one auger 24.5. The toes 22.5 and slot 16.5 are arranged to feed ears mainly into that auger.

The inventor believes that the use of a pair of counter-rotating augers will facilitate introduction of ears into the transport means after gathering. The maximum width of the slot 16, at the front lower end of the auger(s) is associated with the radial width of the auger helix(es) at that point. With counter rotating augers, the slot width can thus be about twice that of a corresponding slot for a single auger.

With reference to Figure 2, drive means for the rotary cutter 27 includes a pulley 125 mounted on a drive shaft 123 of the thresher 15. A complemental pulley 127 is mounted on the shaft 35 of the rotary cutter 27. A V-belt 129 transmits rotary drive from the pulley 125 to the pulley 127.

The rotary speed of the drive shaft 123 is of the order of 700 r.p.m. The drive means effects about a 3 to 1 increase in speed to cause the rotary cutter 27 to rotate at a speed of roughly 2000 r.p.m.

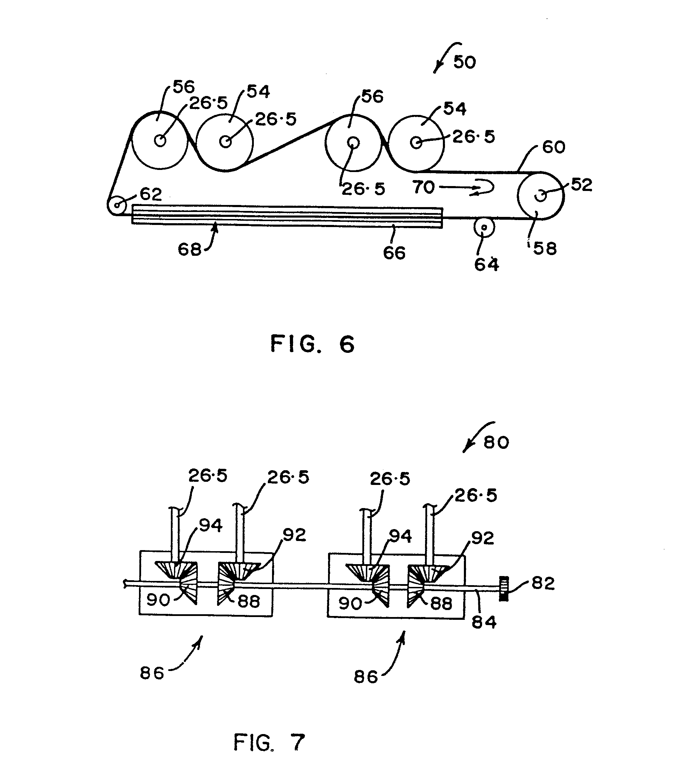

With reference to Figure 6, a first embodiment of drive means for the augers 24.5 of Figure 5, is generally indicated by reference numeral 50. The drive means 50 operates from a drive shaft 52 of a thresher such as the thresher 15 associates with the reaper 12.5.

The drive means includes a drive pulley 58 mounted on the drive shaft 52, pairs of driven pulleys 54, 56 mounted on shafts 26.5 of the augers 24.5 of Figure 5 and a similar pair of augers of a reaper similar to the reaper 12.5. The drive means 50 further includes a V-belt 60 arranged in counter rotating drive formation about the pulleys 54, 56 and driven by means of the pulley 58. A guide pulley 62 is provided in association with a guide member 66 having a guide slot or groove 68. The guide pulley 62 is arranged to bring the V-belt 60 in register with the slot or groove 68. A tensioner pulley 64 is provided to tension the V-belt 60 suitably.

In use, the driving pulley 58, driven by the drive shaft 52, drives the V-belt 60 as indicated by arrow 70. The V-belt 60 drives the pairs of driven pulleys 54, 56 fixed to the shafts 26.5 of the augers 24.5 to drive them in counter rotating fashion.

Instead of a V-belt and pulleys, drive means similar to the drive means 50 can make use of cogged wheels and a chain.

With reference to Figure 7, an alternative embodiment of drive means is indicated by reference numeral 80. The drive means 80 includes a transverse drive shaft 84 having, at one end, a pinion or cog 82.

14

The pinion or cog 82 is, in use, driven via a gear train or a chain from drive means associated with a thresher such as the thresher 15 of Figure 1. The drive shaft 84 extends through a pair of gear boxes 86 respectively associates with pairs of augers 24.5. In each gear box 86, there is provided a pair of opposed bevel gears 88, 90 respectively arranged to mesh with complemental bevel gears 92, 94 at the ends of shafts 26.5 of the augers 24.5. The arrangement will drive the augers in counter rotating fashion.

The inventor is of opinion that a reaper in accordance with the invention has the advantage that the major portion of the stalks and leaves of the plants are left on the land while a relatively small proportion of the stalks and leaves is conveyed with the ears into the thresher. The thresher has thus relatively little material to work. The inventor further believes that a reaper in accordance with the invention is comparatively inexpensive to acquire and to operate compared to other reapers adapted to leave the major portions of stalks and leaves on the land.

A further advantage of the reaper of the invention is that plant material left on the land is chopped into small pieces to form a beneficial mulch on the surface of the land.

pinion or cog 82. The pinion or cog 82 is, in use, driven via a gear train or a chain from drive means associated with a thresher such as the thresher 15 of Figure 1. The drive shaft 84 extends through a pair of gear boxes 86 respectively associates with pairs of augers 24.5. In each gear box 86, there is provided a pair of opposed bevel gears 88, 90 respectively arranged to mesh with complemental bevel gears 92, 94 at the ends of shafts 26.5 of the augers 24.5. The arrangement will drive the augers in counter rotating fashion.

The inventor is of opinion that a reaper in accordance with the invention has the advantage that the major portion of the stalks and leaves of the plants are left on the land while a relatively small proportion of the stalks and leaves is conveyed with the ears into the thresher. The thresher has thus relatively little material to work. The inventor further believes that a reaper in accordance with the invention is comparatively inexpensive to acquire and to operate compared to other reapers adapted to leave the major portions of stalks and leaves on the land.

A further advantage of the reaper of the invention is that plant material left on the land is chopped into small pieces to form a beneficial mulch on the surface of the land.

CLAIMS

1.      A reaper (12) suitable for use in reaping crops such as maize having ears, the reaper being adapted to reap ears from plants and to leave stalks and leaves of the plants on the land, the reaper including

a chute (14, 14.4, 14.5) arranged to slope in use from a low level upwardly and rearwardly, and having a slot (16, 16.4, 16.5) from its fore lower end (18, 18.4, 18.5) where it is open-ended, toward its aft upper end (20), the slot being of a width slidingly to pass the stalks and to retain the ears of crops for which it is intended;

gathering members (22, 22.4, 22.5) disposed on either side of the slot at the fore lower end of the chute and adapted, in use, to guide plants into the slot and into the chute;  and

transport means (24, 24.4, 24.5) adapted to transport ears upwardly and rearwardly along the chute, characterized

in that the transport means are rotary transport means (24, 24.4, 24.5) extending longitudinally along the chute, and being rotatable to effect transportation of the ears;  and

by severing means (27) near the aft upper end of the slot and adapted to sever ears from their stalks.

2.      A reaper as claimed in Claim 1, characterized in that the rotary transport means includes an auger (24, 24.4, 24.5) within the chute (14, 14.4, 14.5).

3.      A reaper as claimed in Claim 2, characterized in that the chute (14, 14.4, 14.5) is of hollow section complementary to the shape of the auger (24, 24.4, 24.5), a part-annular passage being defined between the chute and the periphery of a helix (32, 32.4, 32.5) of the auger.

4.      A reaper as claimed in Claim 3, characterised in that the auger (24, 24.4, 24.5) is tapered at its fore lower end, the annular passage being correspondingly diverging.

5.      A reaper as claimed in Claim 2 or Claim 3 or Claim 4, characterized in that the chute (14.4) and the auger (24.4) are arranged to be, in use, laterally inclined (54) relative to the intended direction of motion (52) when seen in plan view.

6.      A reaper as claimed in any one of Claim 1 to Claim 6 inclusive, characterized in that the severing means includes dynamic cutting means (27).

7.      A reaper as claimed in Claim 6, characterized in that the dynamic cutting means is in the form of a chopper (27) adapted to effect cutting and to chop the stalks and leaves into pieces.

8.      A reaper as claimed in Claim 7, characterized in that the chopper (27) has a rotary blade (34) rotatable about a decumbent axis (35).

9.      A reaper as claimed in Claim 1, characterized in that the rotary transport means includes a pair of augers (24.5) extending alongside each other within and along the chute (24.5), the gathering members (22,5) being arranged in use to introduce ears in between adjacent lower fore ends of the augers.

10.      A combine harvester (10) having a thresher (15) and a reaper (12) suitable for use in reaping crops such as maize having ears, the reaper being adapted to reap ears from plants and to leave stalks and leaves of the plants on the land, the reaper including

a chute (14, 14.4, 14.5) arranged to slope in use from a low level upwardly and rearwardly, and having a slot (16, 16.4, 16.5) from its fore lower end (18, 18.4, 18.5) where it is open-ended, toward its aft upper end (20), the slot being of a width slidingly to pass the stalks and to retain the ears of crops for which it is intended;

gathering members (22, 22.4, 22.5) disposed on either side of the slot at the fore lower end of the chute and adapted, in use, to guide plants into the slot and into the chute; and

transport means (24, 24.4, 24.5) adapted to transport ears upwardly and rearwardly along the chute, characterized

in that the transport means are rotary transport means (24, 24.4, 24.5) extending longitudinally along the chute, and being rotatable to effect transportation of the ears; and

by severing means (27) near the aft upper end of the slot and adapted to sever ears from their stalks.

11. A combine harvester as claimed in Claim 10, characterized in that the chute (14) is arranged to slope at an angle (40) of between 20 degrees and 60 degrees with the land surface, in use.

12.      A combine harvester as claimed in Claim 10 or Claim 11, characterized in that the rotary transport means (24) is drivingly connectable to a source of rotary power (123, 52, 82) associated with moving the combine harvester (10) over a land.

13.      A combine harvester as claimed in Claim 12, characterized in that the arrangement is such that the rotation speed of the transport means (24) and the translation speed of the combine harvester (10) will, in use, be in direct proportion.

14.      A combine harvester as claimed in Claim 13, characterized in that the relation between the rotation speed of the transport means (24) and the translation speed of the combine harvester (10) is such that the projected feeding speed of the transport means will be about the same as the translation speed of the combine harvester.

FIG. 1

FIG. 2

FIG. 3

0179930

2/3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 509 506 (PIETRO LAVERDA) <br><br> * Figures 1-3; page 1, right-hand column, line 23 - page 2, left-hand column, line 6 * | 1-3,6, 9-12 | A 01 D 45/02 |
| Y | FR-A-2 385 319 (MILLER) <br><br> * Figures 1-4; page 3, lines 1-8 * | 1-3,6, 9-12 | |
| A | US-A-2 501 782 (MOCK) <br><br> * Figures 1-3; column 2, lines 11-46; column 3, lines 43-50 * | 1,2,4, 11,12 | |
| A | DE-A-3 231 953 (ALOIS POTTINGER) <br> * Figure 2; page 7, lines 21-34 * | 1,5 | TECHNICAL FIELDS SEARCHED (Int. Cl.4) |
| A | US-A-2 385 193 (BURGIN) <br> * Figures 1,2; page 2, left-hand column, lines 19-39; page 3, right-hand column, lines 9-44 * | 1,5-8 | A 01 D <br> A 01 F |

The present search report has been drawn up for all claims

| Place of search | Date of completion of the search | Examiner |
|---|---|---|
| THE HAGUE | 06-06-1985 | DISSEN H.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82